# EUROPÄISCHE PATENTSCHRIFT

(11) **EP 3 504 459 B1**
(45) Veröffentlichungstag und Bekanntmachung des Hinweises auf die Patenterteilung: **18.03.2026**
(21) Anmeldenummer: 17752391.7
(22) Anmeldetag: 16.08.2017
(51) Int. Cl.: F16F 7/116, F16F 7/108

(54) **SCHWINGUNGSTILGER**
VIBRATION DAMPER
AMORTISSEUR DE VIBRATIONS

(30) Priorität: 25.08.2016 DE 102016115782
(43) Veröffentlichungstag der Anmeldung: 03.07.2019
(73) Patentinhaber: Vibracoustic SE, 69469 Weinheim (DE)
(72) Erfinder: BACK, Friedrich, 79379 Müllheim (DE); GÖBEL, Udo, 79395 Neuenburg am Rhein (DE); DÜRRE, Markus, 79395 Neuenburg am Rhein (DE); PAUL, Christian, 79424 Auggen (DE); SOMMERHALTER, Matthias, 79418 Schliengen (DE)
(74) Vertreter: Patentanwälte Olbricht Buchhold Keulertz
(86) Internationale Anmeldenummer: PCT/EP2017/070784
(87) Internationale Veröffentlichungsnummer: WO 2018/036884

(56) Entgegenhaltungen:
- CN-A- 104 696 409
- DE-A1- 102013 104 034
- DE-C1- 19 547 715
- JP-A- 2005 188 716
- JP-A- H09 184 538
- KR-A- 20010 059 095
- US-A1- 2004 149 531
- US-A1- 2008 197 549

## Beschreibung

Die vorliegende Erfindung betrifft einen Schwingungstilger zum Dämpfen von Schwingungen eines Kraftfahrzeugteils, insbesondere einer Heckklappe oder eines Daches eines Kraftfahrzeugs, mit einer an dem Kraftfahrzeugteil befestigbaren Haltevorrichtung, einer Tilgermasse, die schwingfähig gegenüber der Haltevorrichtung ist, und einer Federvorrichtung, die die Tilgermasse schwingfähig an die Halte Vorrichtung koppelt.

Schwingungstilger der eingangs genannten Art werden zur Bedämpfung der Schwingungen von Kraftfahrzeugteilen eingesetzt, um die störenden Schwingungen vom Fahrgastraum zu entkoppeln und so den Fahrkomfort zu verbessern. Herkömmliche Schwingungstilger weisen eine Federvorrichtung und eine Tilgermasse auf, die über die Federmasse an das zu bedämpfende Kraftfahrzeugteil schwingfähig gekoppelt ist. Fängt das mit dem Schwingungstilger verbundene Kraftfahrzeugteil zu schwingen an, schwingt die Tilgermasse mit einer gewissen Verzögerung mit, wobei eine Bedämpfung der Schwingungen über die Federvorrichtung erfolgt. Ein derartiger Schwingungstilger wird beispielsweise zum Bedampfen von Schwingungen im Bereich einer Heckklappe oder eines Daches eines Kraftfahrzeugs eingesetzt.

Aus DE 195 47 715 C1 geht ein Schwingungstilger hervor, der eine Tilgermasse aufweist, die durch zumindest einen Federkörper aus elastomerem Werkstoff mit einem Befestigungsflansch verbunden ist, wobei die Tilgermasse und der Befestigungsflansch durch zumindest eine Verliersicherung unverlierbar aneinander festgelegt sind. Die Verliersicherung ist im Querschnitt betrachtet im Wesentlichen T-förmig ausgebildet und starr mit der Tilgermasse verbunden. Die Verliersicherung durchdringt jeweils eine Ausnehmung des Federkörpers und des Befestigungsflansches, wobei die tellerförmige Stirnseite der Verliersicherung als Anschlag ausgebildet und der der Tilgermasse abgewandten Seite des Befestigungsflansches mit Abstand benachbart zugeordnet ist.

Ferner geht aus US 2008/0197549 A1 eine vibrationsdämpfende Vorrichtung hervor, die ein Masseelement aufweist, das elastisch von einem als Metallblattfeder ausgebildeten Federelement auf einem zu dämpfenden vibrierenden Element zum Bilden eines sekundären vibrierenden Systems getragen wird. Das Masseelement weist eine Befestigungsplatte auf, die jeweils endseitig mit elastischen Überzügen versehen ist, wobei die Enden des Masseelementes samt der Überzüge in Ausnehmungen des Halters hineinragen, so dass eine Relativbewegung des Masseelements relativ zu den Haltern begrenzt wird.

Des Weiteren geht aus DE 10 2013 104 034 A1 ein Schwingungstilger mit einer an ein schwingendes Bauteil starr ankoppelnden Basis, eine Tilgermasse und ein Federkörper hervor, der zwischen der Basis und der Tilgermasse angeordnet ist. Zur Begrenzung der axialen Bewegung der Tilgermasse weist die Basis Anschlagflansche auf, die mit einem Anschlagflansch der Tilgermasse sowie einem in die Tilgermasse eingesetzten Innenflansch zusammenwirken.

Aus JP H09 184538 A ist ein Schwingungstilger mit einer länglichen Tilgermasse bekannt, die an beiden Enden ein Stiftelement aufweist. Auf den Stiftelementen sitzt jeweils ein Elastomerelement. Mit diesen Elastomerelementen ist die Tilgermasse jeweils in einem Aufnahmeauge eines Halterelements eingesetzt. Durch Deformation des Elastomerelements kann die Tilgermasse quer zu ihrer Längsachse ausgelenkt werden und auch in Längsrichtung zwischen den Halterelementen schwingen.

CN 104 696 409 A gibt einen Schwingungstilger mit einer Tilgermasse mit zwei stirnseitigen Zapfen an. Die zwei Zapfen durchmessen jeweils ein Aufnahmeauge in einem Halteelement. Radial beabstandet von den zwei Zapfen ist jeweils eine Elastomerfeder zwischen der Tilgermasse und den Haltelementen anvulkanisiert. Die so ausgebildeten Elastomerfedern durchmessen zudem mit einem Kragen die Aufnahmeaugen, um so einen gedämpften Anschlag für die Zapfen auszubilden.

Des Weiteren ist aus US 2004/149531 A1 ein Schwingungstilger mit einer Tilgermasse bekannt, an deren Stirnseiten jeweils ein Stiftelement sitzt, das mit einem Queranschlag, ausgebildet durch einen Kragen eines Aufnahmeauges zusammenwirkt. Zwischen der Tilgermasse und dem Aufnahmeauge erstreckt sich eine hohlzylindrische Elastomerfeder, die an ihrem ersten Ende das Aufnahmeauge formschlüssig auskleidet und an ihrem anderen Ende an den Außenumfang der Tilgermasse angrenzt. Bei einer maximalen Auslenkung schlägt das Stiftelement an der Elastomerfeder am Innenumfang des Aufnahmeauges an.

Der vorliegenden Erfindung liegt die Aufgabe zugrunde, einen Schwingungstilger zu schaffen, der eine hohe Lebensdauer aufweist und zudem kostengünstig in Herstellung ist.

Zur Lösung der Aufgabe wird ein Schwingungstilger mit den Merkmalen des Anspruchs 1 vorgeschlagen.

Vorteilhafte Ausgestaltungen des Schwingungstilgers sind Gegenstand der abhängigen Ansprüche.

Der Schwingungstilger zum Dämpfen von Schwingungen eines Kraftfahrzeugteils, insbesondere einer Heckklappe oder eines Daches eines Kraftfahrzeugs, weist eine an dem Kraftfahrzeugteil befestigbare Haltevorrichtung, eine Tilgermasse, die schwingfähig gegenüber der Haltevorrichtung ist, und eine Federvorrichtung auf, die die Tilgermasse schwingfähig an die Haltevorrichtung koppelt, wobei die Tilgermasse wenigstens eine Verlier- und/oder Wegbegrenzungseinrichtung aufweist, die mit der Haltevorrichtung zusammenwirkt, um eine Auslenkung der Tilgermasse relativ zu der Haltevorrichtung zu begrenzen.

Die Verlier- und/oder Wegbegrenzungseinrichtung verhindert eine Überlastung der Federvorrichtung, indem sie die Auslenkung der Tilgermasse relativ zu der Haltevorrichtung begrenzt. Insbesondere bewirkt die Verlier- und/oder Wegbegrenzungseinrichtung, dass sich die Tilgermasse nur innerhalb vorgegebener Wege zur Bedämpfung der Schwingungen frei bewegen kann, ohne dabei die Federvorrichtung zu stark zu beanspruchen oder zu beschädigen. Dadurch entfallen aufwändige Absicherungsmaßnahmen, die die Auslenkung der Tilgermasse einschränken sollen. Somit weist der Schwingungstilger eine lange Lebensdauer auf. Darüber hinaus verhindert die Verlier- und/oder Wegbegrenzungseinrichtung bei einem Versagen der Federvorrichtung, dass sich die Tilgermasse vollständig von der Haltevorrichtung löst. Dadurch können Beschädigungen an Kraftfahrzeugteilen sowie ein Verlust der Tilgermasse vermieden werden. Darüber hinaus ist der Schwingungstilger einfach und kostengünstig herstellbar, da die Federvorrichtung separat zu der Tilgermasse und der Haltevorrichtung herstellgestellt werden kann. Folglich kann ein Baukastensystem generiert werden, welches sich mit unterschiedlichen Tilgermassen und/oder Haltevorrichtungen kombinieren lässt. Ferner kann über die Härte der Federvorrichtung und/oder die Gestaltung der Geometrie der Federvorrichtung die Schwingfrequenz des Schwingungstilgers eingestellt werden.

Der Schwingungstilger wird vorteilhaft zur Dämpfung der an einer Heckklappe oder eines Daches eines Kraftfahrzeugs auftretenden Schwingungen verwendet, wobei der Schwingungstilger nicht auf diese Kraftfahrzeugteile beschränkt ist. Der Schwingungstilger wird über die Haltevorrichtung an dem Kraftfahrzeugteil befestigt. Die Schwingungen des Kraftfahrzeugteils werden über die Haltevorrichtung und die Federvorrichtung in die Tilgermasse eingeleitet. Dadurch wird die Tilgermasse relativ zu der Haltevorrichtung ausgelenkt und zu Schwingungen angeregt. Diese Schwingungen werden wiederrum von der Federvorrichtung bedämpft. Folglich werden die von dem Kraftfahrzeugteil resultierenden Schwingungen wirksam bedämpft, so dass der Fahrkomfort erhöht wird. Die Verlier- und/oder Wegbegrenzungseinrichtung begrenzt dabei erfindungsgemäß die Auslenkung der Tilgermasse relativ zu der Haltevorrichtung.

Erfindungsgemäß weist die Verlier- und/oder Wegbegrenzungseinrichtung Stiftelemente auf, die mit Anschlageinrichtungen zusammenwirken, die in der Haltevorrichtung integriert sind. Dadurch kann die Auslenkung der Tilgermasse relativ zu der Haltevorrichtung begrenzt werden, so dass eine Überlastung der Federvorrichtung sowie bei einem Versagen der Federvorrichtung ein Lösen der Tilgermasse effektiv verhindert: wird. Des Weiteren ist eine als Stiftelemente ausgebildete Verlier- und/oder Wegbegrenzungseinrichtung einfach und kostengünstig herstellbar.

In einer vorteilhaften Ausgestaltung sind die Stiftelemente formschlüssig, kraftschlüssig und/oder stoffschlüssig mit der Tilgermasse verbunden. Die Stiftelemente können als Zapfen ausgebildet sein, die materialeinheitlich aus der Tilgermasse hergestellt sein können. Hierzu können die Zapfen aus einem Abschnitt der Tilgermasse gedreht sein. Ferner können die Stiftelemente separat hergestellt und ein Abschnitt der Stiftelemente kann formschlüssig, kraftschlüssig und/oder stoffschlüssig mit der Tilgermasse verbunden sein. Beispielsweise können die Abschnitte der Stiftelemente in die Tilgermasse eingebrachte Öffnungen eingepresst werden. Darüber hinaus können die Abschnitte der Stiftelemente stoffschlüssig mit der Tilgermasse beispielsweise durch Verschweißen verbunden sein. Darüber hinaus können die Abschnitte der Stiftelemente als Gewindestift ausgeführt sein, die in Gewindebohrungen, die in die Tilgermasse eingebracht sind, eingeschraubt sein können.

Vorteilhaft ist jeweils ein Stiftelement an jeweils einer Stirnfläche der Tilgermasse angeordnet. Insbesondere ist jeweils ein Stiftelement formschlüssig, kraftschlüssig und/oder stoffschlüssig mit jeweils einer Stirnfläche der Tilgermasse verbunden. Dadurch kann die Auslenkung der Tilgermasse relativ zu der Haltevorrichtung begrenzt werden, so dass eine Überlastung der Federvorrichtung sowie bei einem Versagen der Federvorrichtung ein Lösen der Tilgermasse effektiv verhindert wird. Insbesondere sind die Stiftelemente derart an den Stirnflächen der Tilgermasse angeordnet, dass deren Längsachsen mit der Längsachse der Tilgermasse fluchten.

Die Anschlageinrichtung ist erfindungsgemäß als Aufnahmeaugen ausgebildet, wobei die Stiftelemente in die Aufnahmeaugen eingreifen. Insbesondere sind die Aufnahmeaugen in die Haltevorrichtung integriert. Die Aufnahmeaugen können als in die Haltevorrichtung eingebrachte Öffnungen ausgebildet sein. Ferner können die Öffnungen mit hülsenartigen Fortsätzen versehen sein. Ein Innendurchmesser der Aufnahmeaugen ist erfindungsgemäß größer als ein Außendurchmesser der Stiftelemente, so dass sich die Stiftelemente über eine vorgegebene Wegstrecke innerhalb der Aufnahmeaugen relativ zu der Haltevorrichtung bewegen können, wenn die Tilgermasse ausgelenkt wird. Demgemäß geben der Innendurchmesser der Aufnahmeaugen und der Außendurchmesser der Stiftelemente die maximale Auslenkung der Tilgermasse vor.

Erfindungsgemäß begrenzt die Verlier- und/oder Wegbegrenzungseinrichtung die Auslenkung der Tilgermasse senkrecht zur Längsachse der Tilgermasse.

Erfindungsgemäß weist die Federvorrichtung zwei Elastomerfedern auf. Über die Elastomerfedern werden die von dem Kraftfahrzeugteil eingeleiteten Schwingungen bedämpft. Vorteilhaft ist eine erste Elastomerfeder mit einem ersten Ende der Tilgermasse und mit einem zweiten Ende mit der Haltevorrichtung verbunden und eine zweite Elastomerfeder ist mit einem ersten Ende mit der Tilgermasse und mit einem zweiten Ende mit der Haltevorrichtung verbunden. Ferner kann über die Härte der Elastomerfedern und/oder die Gestaltung der Elastomerfedergeometrien die Schwingfrequenz des Schwingungstilgers eingestellt werden.

Vorteilhafterweise sind die Elastomerfedern formschlüssig und/oder kraftschlüssig mit der Tilgermasse und der Haltevorrichtung verbunden. Erfindungsgemäß sind die Elastomerfedern separat vulkanisiert und anschließend mit der Tilgermasse und optional der Haltevorrichtung verbunden. Dadurch ist das Vulkanisationswerkzeug nicht mehr von der Geometrie der Tilgermasse abhängig, so dass für weitere Varianten mit geänderten Tilgermassengeometrien kein neues Vulkanisationswerkzeug erstellt werden muss. Somit sind die Herstellungskosten bei einem Schwingungstilger mit separat vulkanisierten Elastomerfedern reduziert. Ferner entsteht durch die separate Vulkanisation ein Baukastensystem, welches sich mit unterschiedlichen Tilgermassen und/oder Haltevorrichtungen kombinieren lässt. Die separat vulkanisierte Elastomerfeder ist erfindungsgemäß mit dem in der Haltevorrichtung integrierten Aufnahmeauge formschlüssig und/oder kraftschlüssig verbunden. Hierzu kann die Elastomerfeder endseitig eine umlaufende Rastnase aufweisen, mittels derer die Elastomerfeder in das Aufnahmeauge eingeknüpft, insbesondere eingeclipst, werden kann. Vorteilhaft ist eine separat vulkanisierte Elastomerfeder formschlüssig und/oder kraftschlüssig mit der Tilgermasse verbunden. Eine separat vulkanisierte Elastomerfeder kann bei der Befestigung an der Tilgermasse vorgespannt werden, um bei einer Bewegung der Tilgermasse ein Lösen der Elastomerfeder von der Tilgermasse zu verhindern.

Die Elastomerfedern sind erfindungsgemäß als Hohlzylinder ausgebildet, wobei die Hohlzylinder Durchgangsöffnungen aufweisen, innerhalb derer die Verlier- und/oder Wegbegrenzungseinrichtung angeordnet ist. Da die Verlier- und/oder Wegbegrenzungseinrichtung innerhalb der Durchgangsöffnungen angeordnet ist, schlägt die Verlier- und/oder Wegbegrenzungseinrichtung erfindungsgemäß bei einer maximalen Auslenkung der Tilgermasse an den Elastomerfedern an, so dass die entstehenden Geräusche gedämpft und somit der Fahrkomfort erhöht werden.

Die Verlier- und/oder Wegbegrenzungseinrichtung legt die Federvorrichtung erfindungsgemäß an der Tilgermasse fest. Dies ist insbesondere dann von Vorteil, wenn die Federvorrichtung separat zur Tilgermasse hergestellt, wird. Hierzu kann die Federvorrichtung einen radial einwärts abragenden Vorsprung aufweisen, der mit einem an der Verlier- und/oder Wegbegrenzungseinrichtung radial umlaufenden Kragen zusammenwirkt. Vorteilhaft wird die Federvorrichtung mittels der Verlier- und/oder Wegbegrenzungseinrichtung an der Tilgermasse vorgespannt, um bei einer Bewegung der Tilgermasse ein Lösen der Elastomerfeder von der Tilgermasse zu verhindern.

In einer vorteilhaften Ausgestaltung ist die Federvorrichtung jeweils endseitig mit ringförmigen Strukturen versehen. Beispielsweise kann eine der ringförmigen Strukturen als Ring und die andere ringförmige Struktur kann als ein im Querschnitt L-förmiger Ring ausgebildet sein. Die ringförmigen Strukturen können in einer nicht beanspruchten Ausgestaltung stoffschlüssig mit der Federvorrichtung verbunden sein. So können die ringförmigen Strukturen an die als Elastomerfedern ausgebildete Federvorrichtung an vulkanisiert sein. Bevorzugt ist jeweils eine ringförmige Struktur an einer Stirnfläche der Elastomerfedern angeordnet. So kann die als Ring ausgebildete ringförmige Struktur an der der Tilgermasse zugewandten Stirnfläche der Elastomerfeder angeordnet sein, während die als L-förmiger Ring ausgebildete ringförmige Struktur an der der Haltevorrichtung zugewandten Stirnfläche der Elastomerfeder angeordnet sein kann. Die ringförmigen Strukturen können aus Kunststoff oder Stahl gefertigt sein.

Vorteilhaft ist die Federvorrichtung mittels der ringförmigen Strukturen an der Haltevorrichtung und/oder der Tilgermasse festgelegt. So kann die als L-förmiger Ring ausgebildete ringförmige Struktur in das Aufnahmeauge der Haltevorrichtung eingepresst sein. Die als Ring ausgebildete ringförmige Struktur kann mittels des Stiftelements an der Tilgermasse festgelegt sein. Hierzu kann der Ring einen kleineren Innendurchmesser als die in der Elastomerfeder ausgebildete Durchgangsöffnung aufweisen, wobei ein an der Verlier- und/oder Wegbegrenzungseinrichtung umlaufender Kragen an dem Ring anliegen kann, um die Elastomerfeder an der Tilgermasse festzulegen.

Die Tilgermasse kann ein Zylinder sein. Eine als Zylinder ausgebildete Tilgermasse ist einfach und kostengünstig herstellbar. Ferner kann die Tilgermasse auch jede andere erdenkliche Form aufweisen. So kann die Tilgermasse im Querschnitt rechteckig, quadratisch oder kreisförmig sein. Ferner kann die Tilgermasse im Querschnitt eine Taillierung aufweisen.

In einer vorteilhaften Ausgestaltung ist die Haltevorrichtung als ein Halteblech ausgebildet, wobei das Halteblech eine Tragplatte und zwei von der Tragplatte abragende Schenkel aufweist. Über die Tragplatte erfolgt die Befestigung des Halteblechs an dem Kraftfahrzeugteil. Hierzu kann die Tragplatte Öffnungen aufweisen in die Befestigungselemente einsetzbar sind. Ferner kann die Tragplatte auch stoffschlüssig mit dem Kraftfahrzeugteil verbunden sein. Die von der Tragplatte abragenden Schenkel können durch Umbiegen der beiden endseitigen Abschnitte der Tragplatte gebildet sein. Die Schenkel können auch als Laschen bezeichnet werden.

Vorteilhaft ist die Tilgermasse zwischen den Schenkeln angeordnet, wobei die Schenkel die Anschlageinrichtungen aufweisen. Insbesondere sind in die Schenkel die die Anschlageinrichtungen bildenden Aufnahmeaugen eingebracht, in die die Stiftelemente hineinragen und mit denen die Federvorrichtungen formschlüssig, kraftschlüssig und/oder stoffschlüssig verbunden sind.

Nachfolgend werden der Schwingungstilger sowie weitere Merkmale und Vorteile anhand von Ausführungsbeispielen näher erläutert, die in den Figuren schematisch dargestellt sind. Hierbei zeigen:
- Fig. 1: eine perspektivische Ansicht eines Schwingungstilgers gemäß einer ersten, aber nicht in den Schutzbereich des Anspruchs 1 fallenden Ausführungsform mit einem Teilausschnitt im Bereich einer Tilgermasse, einer Federvorrichtung und eines Aufnahmeauges;
- Fig. 2: eine perspektivische Ansicht eines Schwingungstilgers gemäß einer zweiten Ausführungsform mit einem Teilausschnitt im Bereich einer Tilgermasse, einer Federvorrichtung und eines Aufnahmeauges; und
- Fig. 3: eine vergrößerte perspektivische Ansicht des in Figur 2 gezeigten Teilausschnitts mit einem Schwingungstilger gemäß einer dritten Ausführungsform.

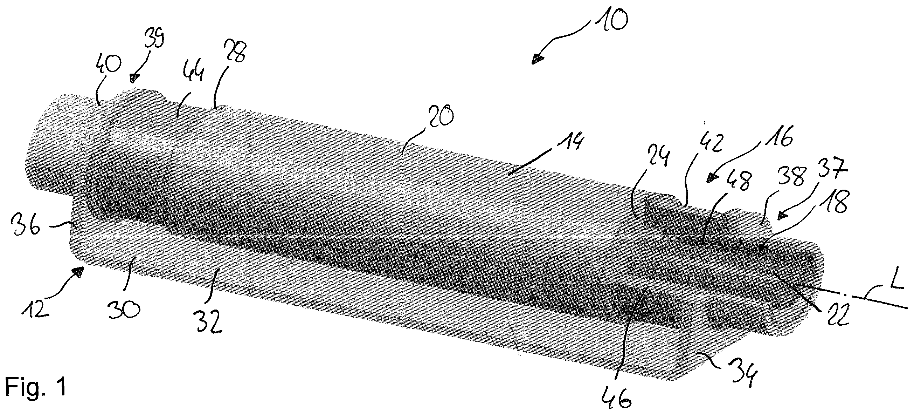

In Figur 1 ist ein Schwingungstilger 10 gemäß einer ersten Ausführungsform gezeigt, der zur Dämpfung von Schwingungen eines nicht dargestellten Kraftfahrzeugteils, insbesondere einer Heckklappe oder eines Daches eines Kraftfahrzeugs, dient. Diese Ausführungsform fällt nicht in den Schutzbereich des Anspruchs 1, enthält aber Informationen zum Verständnis der weiteren Ausführungsformen.

Der Schwingungstilger 10 umfasst eine an dem Kraftfahrzeugteil befestigbare Haltevorrichtung 12, eine Tilgermasse 14, die schwingfähig gegenüber der Haltevorrichtung 12 ist, und eine Federvorrichtung 16, die die Tilgermasse 14 schwingfähig an die Haltevorrichtung 12 koppelt.

Die Tilgermasse 14 hat die Form eines Zylinders und weist eine Verlier- und/oder Wegbegrenzungseinrichtung 18 auf, die mit der Haltevorrichtung 12 zusammenwirkt, um eine Auslenkung der Tilgermasse 14 relativ zu der Haltevorrichtung 12 zu begrenzen.

Wie in Figur 1 ersichtlich ist, weist die Verlier- und/oder Wegbegrenzungseinrichtung 18 Stiftelemente 22 auf, wobei eines der Stiftelemente 22 an einer ersten Stirnfläche 24 der Tilgermasse 14 angeordnet ist, und das andere Stiftelement 22 an einer zweiten Stirnfläche 28 der Tilgermasse 14 angeordnet ist. Vorliegend sind die beiden Stiftelemente 22 als Zapfen ausgebildet, die aus endseitigen Abschnitten der Tilgermasse 14 gedreht oder in eine in die Stirnflächen 24, 28 eingebrachte Öffnung eingesetzt sind. Die Stiftelemente 22 sind dabei derart an den Stirnflächen 24, 28 angeordnet, dass die Längsachsen der Stiftelemente 22 mit der Längsachse L der Tilgermasse 14 fluchten.

Die Haltevorrichtung 12 ist als ein Halteblech 30 ausgebildet, das eine Tragplatte 32, einen von der Tragplatte abragenden ersten Schenkel 34 und einen von der Tragplatte 32 abragenden zweiten Schenkel 36 aufweist, wobei der erste Schenkel 32 eine erste Anschlageinrichtung 37 und der zweite Schenkel 34 eine zweite Anschlageinrichtung 39 aufweist, die mit den Stiftelementen 22 zusammenwirken, um die Auslenkung der Tilgermasse 14 relativ zu der Haltevorrichtung 12 zu begrenzen. Ober die Tragplatte 32 erfolgt die Befestigung des Schwingungstilgers 10 an dem nicht dargestellten Kraftfahrzeugteil. Hierzu kann die Tragplatte 32 mit nicht dargestellten Öffnungen versehen sein, in die Befestigungselemente, wie beispielsweise Schrauben, einsetzbar sind.

Die beiden Schenkel 34, 36 sind durch Umbiegen der endseitigen Abschnitte der Tragplatte 32 gebildet. Der erste Schenkel 34 weist ein erstes Aufnahmeauge 38 und der zweite Schenkel weist ein zweites Aufnahmeauge 40 auf. Die beiden Aufnahmeaugen 38, 40 bilden dabei die Anschlageinrichtungen 37, 39. Jedes der Aufnahmeaugen 38, 40 ist aus einer in die Schenkel 34, 36 eingebrachten Öffnung und einem hülsenartig von den beiden Schenkeln 34, 36 abragenden Fortsatz gebildet.

Die Federvorrichtung 16 umfasst eine erste Elastomerfeder 42, die die Tilgermasse 12, insbesondere die erste Stirnfläche 24, mit dem ersten Aufnahmeauge 38 koppelt, und eine zweite Elastomerfeder 44, die die Tilgermasse 14, insbesondere die zweite Stirnfläche 28, mit dem zweiten Aufnahmeauge 40 koppelt. Hierzu sind die beiden Elastomerfedern 42, 44 an die Stirnflächen 24, 28 sowie an die Schenkel 34, 36 und die Innenflächen der Aufnahmeaugen 38, 40 anvulkanisiert.

Wie in Figur 1 ferner ersichtlich ist, sind die Elastomerfedern 32, 34 als Hohlzylinder 46 ausgebildet, wobei sich die Stiftelemente 22 innerhalb einer im Hohlzylinder 46 ausgebildeten Durchgangsöffnung 48 erstrecken, so dass die Elastomerfedern 32, 34 die Stiftelemente 22 umgeben.

Im Folgenden wird die Funktionsweise des Schwingungstilgers 10 erläutert. Die Schwingungen eines mit dem Schwingungstilger 10 verbundenen Kraftfahrzeugteils werden über die Haltevorrichtung 12 und die Federvorrichtung 16 auf die Tilgermasse 14 übertragen. Dadurch wird die Tilgermasse 14 relativ zu der Haltevorrichtung 12 ausgelenkt und fängt an zu schwingen, wobei die Schwingungen über die beiden Elastomerfedern 42, 44 bedämpft und so vom Fahrgastraum entkoppelt werden. Dadurch werden im Fahrgastraum keine von dem Kraftfahrzeugteil störenden Klappergeräusche wahrgenommen. Die Verlier- und/oder Wegbegrenzungseinrichtung 18, insbesondere die Stiftelemente 22, begrenzen die Auslenkung der Tilgermasse 14 relativ zu der Haltevorrichtung 12, indem die Stiftelemente 22 an die innerhalb der Aufnahmeaugen 38, 40 angeordneten Elastomerfedern 42, 44 anschlagen. Dadurch wird eine Überlastung der Elastomerfedern 42, 44 aktiv verhindert, so dass der Schwingungstilger 10 eine lange Lebensdauer aufweist. Zudem wirken die Stiftelemente 22 als Verliersicherung, so dass sich die Tilgermasse 14 bei einem Versagen der Elastomerfedern 42, 44 nicht von der Haltevorrichtung 12 lösen kann. Darüber hinaus dämpfen die innerhalb der Aufnahmeaugen 38, 40 angeordneten Elastomerfedern 42, 44 die beim Anschlagen der Stiftelemente 22 auftretenden Geräusche.

Nachfolgend werden weitere Ausführungsformen des Schwingungstilgers 10 beschrieben, wobei zu deren Beschreibung die bereits zuvor verwendeten Bezugszeichen für gleiche oder funktionsgleiche Teile verwendet werden.

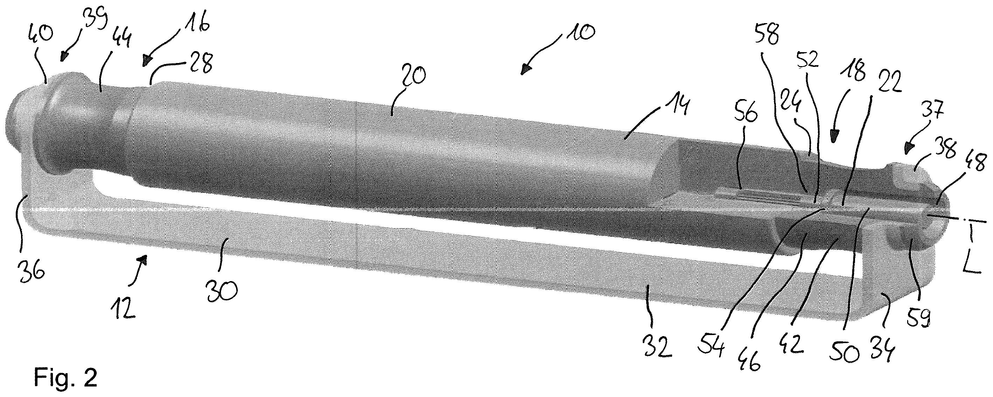

In Figur 2 ist eine zweite Ausführungsform eines Schwingungstilgers 10 gezeigt, die sich von der ersten Ausführungsform in der Ausgestaltung der Stiftelemente 22 und der Elastomerfedern 42, 44 sowie der Befestigung der Elastomerfedern 42, 44 an der Tilgermasse 14 und den Aufnahmeaugen 38, 40 unterscheidet.

Die Stiftelemente 22 weisen einen Verlier- und/oder Wegbegrenzungsabschnitt 50, einen Befestigungsabschnitt 52 und einen radial umlaufenden Kragen 54 auf, der die beiden Abschnitte 50, 52 voneinander trennt. Der Verlier- und/oder Wegbegrenzungsabschnitt 50 erstreckt durch die Durchgangsöffnung 48 in das Aufnahmeauge 38 und dient zur Verliersicherung und/oder Wegbegrenzung der Tilgermasse 14. Über den Befestigungsabschnitt 52 wird das Stiftelement 22 an der Tilgermasse 14 befestigt. Vorliegend ist der Befestigungsabschnitt 52 in eine in die Tilgermasse 14 eingebrachte Bohrung 56 eingesetzt, insbesondere eingepresst.

Die Elastomerfedern 42, 44 sind vorliegend separat vulkanisiert und mittels der Stiftelemente 22 an der Tilgermasse 14 festgelegt und in die Aufnahmeaugen 38, 40 eingeknüpft, insbesondere eingeclipst.

Zur Befestigung der Elastomerfedern 42, 44 an der Tilgermasse 14 weisen die Elastomerfedern 42, 44 jeweils einen radial einwärts abragenden Vorsprung 58 auf, an dem der Kragen 54 anliegt.

Zur Befestigung der Elastomerfedern 42, 44 in den Aufnahmeaugen 38, 40 sind die Elastomerfedern 42, 44 jeweils endseitig mit einer umlaufenden Rastnase 59 versehen, die einen umlaufenden Rand der Aufnahmeaugen 33, 40, insbesondere der hülsenartigen Fortsätze, hintergreifen.

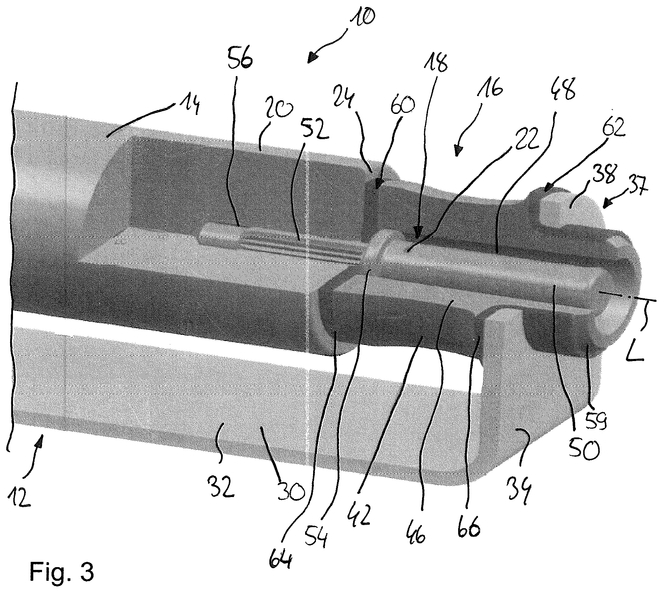

In Figur 3 ist eine dritte Ausführungsform des Schwingungstilgers 10 gezeigt, die sich von der zweiten Ausführungsform dadurch unterscheidet, dass die Aufnahmeaugen 38, 40 keine hülsenartigen Fortsätze aufweisen und dass die Elastomerfedern 42, 44 jeweils endseitig mit ringförmigen Strukturen 60, 62 versehen sind.

Die ringförmigen Strukturen 60, 62 sind an die Elastomerfedern 42, 44 anvulkanisiert und können aus Kunststoff oder Stahl gefertigt sein.

Eine erste ringförmige Struktur 60 ist als ein Ring 64 ausgebildet. Über den Ring 64 erfolgt die Befestigung der Elastomerfeder 42 an der Tilgermasse 14. Wie in Fig. 3 ersichtlich ist, weist der Ring 64 einen kleineren Innendurchmesser als die Durchgangsöffnung 48 auf. Der Kragen 54 liegt an dem Ring 64 an, um die Elastomerfeder 42 an der Tilgermasse 14 festzulegen.

Eine zweite ringförmige Struktur 64 ist als ein im Querschnitt L-förmiger Ring 66 ausgebildet, der endseitig von der umlaufenden Rastnase 59 hintergriffen wird. Über den L-förmigen Ring 64 wird die Elastomerfeder 42 in dem Aufnahmeauge 38 festgelegt, indem der L-förmige Ring 66 in das Aufnahmeauge 38 eingepresst wird.

### Bezugszeichenliste

- 10: Schwingungstilger
- 12: Haltevorrichtung
- 14: Tilgermasse
- 16: Federvorrichtung
- 18: Verlier- und/oder Wegbegrenzungseinrichtung
- 20: Zylinder
- 22: Stiftelement
- 24: erste Stirnfläche
- 28: zweite Stirnfläche
- 30: Halteblech
- 32: Tragplatte
- 34: erster Schenkel
- 36: zweiter Schenkel
- 37: erste Anschlageinrichtung
- 38: erstes Aufnahmeauge
- 39: zweite Anschlageinrichtung
- 40: zweites Aufnahmeauge
- 42: erste Elastomerfeder
- 44: zweite Elastomerfeder
- 46: Hohlzylinder
- 48: Durchgangsöffnung
- 50: Verlier- und/oder Wegbegrenzungsabschnitt
- 52: Befestigungsabschnitt
- 54: radial umlaufender Kragen
- 56: Bohrung
- 58: Vorsprung
- 59: Rastnase
- 60: erste ringförmige Struktur
- 62: zweite ringförmige Struktur
- 64: Ring
- 66: L-förmiger Ring
- L: Längsachse

## Patentansprüche

1. Schwingungstilger (10) zum Dämpfen von Schwingungen eines Kraftfahrzeugteils mit einer an dem Kraftfahrzeugteil befestigbaren Haltevorrichtung (12), einer Tilgermasse (14), die schwingfähig gegenüber der Haltevorrichtung (12) ist, und einer Federvorrichtung (16), die die Tilgermasse (14) schwingfähig an die Haltevorrichtung (12) koppelt, wobei die Tilgermasse (14) wenigstens eine Verlier- und/oder Wegbegrenzungseinrichtung (18) aufweist, die mit der Haltevorrichtung (12) zusammenwirkt, um eine Auslenkung der Tilgermasse (14) relativ zu der Haltevorrichtung (12) zu begrenzen, wobei die Verlier- und/oder Wegbegrenzungseinrichtung (18) Stiftelemente (22) aufweist, die mit Anschlageinrichtungen (37, 38) zusammenwirken, die in der Haltevorrichtung (12) integriert sind, wobei die Federvorrichtung (16) zwei Elastomerfedern (42, 44) aufweist und die Elastomerfedern (42, 44) als Hohlzylinder (46) ausgebildet sind, wobei die Hohlzylinder (46) Durchgangsöffnungen (48) aufweisen, innerhalb derer die Verlier- und/oder Wegbegrenzungseinrichtung (18) angeordnet ist, sodass die Verlier- und/oder Wegbegrenzungseinrichtung (18) bei einer maximalen Auslenkung der Tilgermasse (14) an den Elastomerfedern (42, 44) anschlägt, wobei die Anschlageinrichtungen (37, 39) als Aufnahmeaugen (38, 40) ausgebildet sind, wobei die Stiftelemente (22) in die Aufnahmeaugen (38, 40) eingreifen, wobei ein Innendurchmesser der Aufnahmeaugen (38, 40) größer als ein Außendurchmesser der Stiftelemente (22) ist, so dass sich die Stiftelemente (22) über eine vorgegebene Wegstrecke innerhalb der Aufnahmeaugen (38, 40) relativ zu der Haltevorrichtung (12) bewegen können, wenn die Tilgermasse (14) ausgelenkt wird, wobei die Verlier- und/oder Wegbegrenzungseinrichtung (18) die Auslenkung der Tilgermasse (14) senkrecht zur Längsachse der Tilgermasse (14) und relativ zur Haltevorrichtung (12) begrenzt, **dadurch gekennzeichnet, dass** die Elastomerfedern (42, 44) separat vulkanisiert und anschließend mit der Tilgermasse (14) verbunden sind, wobei die separat vulkanisierte Elastomerfeder (42, 44) jeweils mit dem in der Haltevorrichtung (12) integrierten Aufnahmeauge (38, 40), formschlüssig und/oder kraftschlüssig verbunden ist, wobei die Verlier- und/oder Wegbegrenzungseinrichtung (18) die Federvorrichtung (16) an der Tilgermasse (14) festlegt.

2. Schwingungstilger (10) nach Anspruch 1 **dadurch gekennzeichnet, dass** die Stiftelemente (22) formschlüssig, kraftschlüssig und/oder stoffschlüssig mit der Tilgermasse (14) verbunden sind.

3. Schwingungstilger (10) nach Anspruch 1 oder 2 **dadurch gekennzeichnet, dass** jeweils ein Stiftelement (22) an jeweils einer Stirnfläche (24, 26) der Tilgermasse (14) angeordnet ist.

4. Schwingungstilger (10) nach einem der vorhergehenden Ansprüche, **dadurch gekennzeichnet, dass** die Federvorrichtung (16) jeweils endseitig mit ringförmigen Strukturen (60, 62) versehen ist.

5. Schwingungstilger (10) nach Anspruch 4 **dadurch gekennzeichnet, dass** die Federvorrichtung (16) mittels der ringförmigen Strukturen (60, 62) an der Haltevorrichtung (12) und/oder der Tilgermasse (14) festgelegt ist.

6. Schwingungstilger (10) nach einem der vorhergehenden Ansprüche, **dadurch gekennzeichnet, dass** die Haltevorrichtung (12) als ein Halteblech (30) ausgebildet ist, wobei das Halteblech (30) eine Tragplatte (32) und zwei von der Tragplatte abragende Schenkel (34, 36) aufweist.

7. Schwingungstilger nach Anspruch 6 **dadurch gekennzeichnet, dass** die Tilgermasse (14) zwischen den Schenkeln (34, 36) angeordnet ist, wobei die Schenkel (34, 36) die Anschlageinrichtungen (37, 39) aufweisen.

## Claims

1. Vibration damper (10) for damping vibrations of a motor vehicle part, comprising a holding device (12) which can be attached to the motor vehicle part, a damper mass (14) which is capable of vibrating relative to the holding device (12), and a spring device (16) which couples the damper mass (14) in a vibration-capable manner to the holding device (12), wherein the damper mass (14) has at least one loss and/or travel limiting device (18) which cooperates with the holding device (12) to limit deflection of the damper mass (14) relative to the holding device (12), wherein the loss and/or travel limiting device (18) comprises pin elements (22) which interact with stop devices (37, 38) integrated in the holding device (12), wherein the spring device (16) comprises two elastomer springs (42, 44) and the elastomer springs (42, 44) are designed as hollow cylinders (46), wherein the hollow cylinders (46) have through openings (48) within which the loss and/or travel limiting device (18) is arranged, so that the loss and/or travel limiting device (18) strikes the elastomer springs (42, 44) when the damper mass (14) is deflected to its maximum extent, wherein the stop devices (37, 39) are designed as receiving eyes (38, 40), wherein the pin elements (22) engage in the receiving eyes (38, 40), wherein an inner diameter of the receiving eyes (38, 40) is greater than an outer diameter of the pin elements (22), so that the pin elements (22) can move over a predetermined distance within the receiving eyes (38, 40) relative to the holding device (12) when the damper mass (14) is deflected, wherein the loss and/or travel limiting device (18) limits the deflection of the damper mass (14) perpendicular to the longitudinal axis of the damper mass (14) and relative to the holding device (12), **characterised in that** the elastomer springs (42, 44) are vulcanised separately and then connected to the damper mass (14), wherein the separately vulcanised elastomer spring (42, 44) is connected in a form-fitting and/or force-fitting manner to the receiving eye (38, 40) integrated in the holding device (12), whereby the loss and/or travel limiting device (18) secures the spring device (16) to the damper mass (14) .

2. Vibration damper (10) according to claim 1, **characterised in that** the pin elements (22) are connected to the damper mass (14) in a form-fitting, force-fitting and/or material-fitting manner.

3. Vibration damper (10) according to claim 1 or 2, **characterised in that** one pin element (22) is arranged on each end face (24, 26) of the damper mass (14).

4. Vibration damper (10) according to one of the preceding claims, **characterised in that** the spring device (16) is provided with annular structures (60, 62) at each end.

5. Vibration damper (10) according to claim 4, **characterised in that** the spring device (16) is fixed to the holding device (12) and/or to the damper mass (14) by the annular structures (60, 62).

6. Vibration damper (10) according to one of the preceding claims, **characterised in that** the holding device (12) is designed as a retaining plate (30), wherein the retaining plate (30) has a support plate (32) and two legs (34, 36) projecting from the support plate.

7. Vibration damper according to claim 6, **characterised in that** the damper mass (14) is arranged between the legs (34, 36), wherein the legs (34, 36) have the stop devices (37, 39).

## Revendications

1. Amortisseur de vibrations (10) destiné à amortir les vibrations d'une pièce d'un véhicule automobile, comprenant un dispositif de fixation (12) pouvant être fixé à la pièce du véhicule automobile, une masse d'amortissement (14) pouvant osciller par rapport au dispositif de fixation (12), et un dispositif à ressort (16) qui couple la masse d'amortissement (14) de manière oscillante au dispositif de fixation (12), la masse d'amortissement (14) présentant au moins un dispositif de limitation de perte et/ou de course (18) qui coopère avec le dispositif de fixation (12) afin de limiter une déviation de la masse d'amortissement (14) par rapport au dispositif de fixation (12), le dispositif de limitation de perte et/ou de course (18) comportant des éléments à tige (22) qui coopèrent avec des dispositifs d'arrêt (37, 38) intégrés dans le dispositif de fixation (12), le dispositif à ressort (16) comportant deux ressorts en élastomère (42, 44) et les ressorts en élastomère (42, 44) étant réalisés sous forme de cylindres creux (46), les cylindres creux (46) comportant des ouvertures de passage (48) à l'intérieur desquelles est disposé le dispositif de limitation de perte et/ou de course (18), de sorte que le dispositif de limitation de perte et/ou de course (18) bute contre les ressorts en élastomère (42, 44) lorsque la masse d'amortissement (14) atteint sa déviation maximale, les dispositifs d'arrêt (37, 39) étant conçus comme des œillets de réception (38, 40), les éléments à tige (22) s'engageant dans les œillets de réception (38, 40), un diamètre intérieur des œillets de réception (38, 40) est supérieure à un diamètre extérieur des éléments à tige (22), de sorte que les éléments à tige (22) peuvent se déplacer sur une distance prédéterminée à l'intérieur des œillets de réception (38, 40) par rapport au dispositif de fixation (12) lorsque la masse d'amortissement (14) est déviée, le dispositif de perte et/ou de limitation de course (18) limitant la déviation de la masse d'amortissement (14) perpendiculairement à l'axe longitudinal de la masse d'amortissement (14) et par rapport au dispositif de fixation (12), **caractérisé en ce que** les ressorts en élastomère (42, 44) sont vulcanisés séparément, puis reliés à la masse d'amortissement (14), le ressort en élastomère vulcanisé séparément (42, 44) étant relié de manière solidaire par complémentarité de forme et/ou par adhérence à l'œillet de réception (38, 40) intégré dans le dispositif de fixation (12), par complémentarité de forme et/ou par adhérence, le dispositif de limitation de perte et/ou de course (18) fixant le dispositif à ressort (16) à la masse d'amortissement (14) .

2. Amortisseur de vibrations (10) selon la revendication 1, **caractérisé en ce que** les éléments à tige (22) sont reliés à la masse d'amortissement (14) par complémentarité de forme, par adhérence et/ou par liaison matière.

3. Amortisseur de vibrations (10) selon la revendication 1 ou 2, **caractérisé en ce qu'**un élément à tige (22) est disposé sur chacune des faces frontales (24, 26) de la masse d'amortissement (14).

4. Amortisseur de vibrations (10) selon l'une des revendications précédentes, **caractérisé en ce que** le dispositif à ressort (16) est muni à chaque extrémité de structures annulaires (60, 62).

5. Amortisseur de vibrations (10) selon la revendication 4, **caractérisé en ce que** le dispositif à ressort (16) est fixé au dispositif de fixation (12) et/ou à la masse d'amortissement (14) au moyen des structures annulaires (60, 62).

6. Amortisseur de vibrations (10) selon l'une des revendications précédentes, **caractérisé en ce que** le dispositif de fixation (12) est conçu comme une tôle de fixation (30), la tôle de fixation (30) comportant une plaque de support (32) et deux branches (34, 36) dépassant de la plaque de support.

7. Amortisseur de vibrations selon la revendication 6, **caractérisé en ce que** la masse d'amortissement (14) est disposée entre les branches (34, 36), les branches (34, 36) comportant les dispositifs d'arrêt (37, 39).
